(19) Europäisches Patentamt / European Patent Office / Office européen des brevets

(11) **EP 4 703 133 A1**

(12) **EUROPEAN PATENT APPLICATION**
published in accordance with Art. 153(4) EPC

(43) Date of publication:
**04.03.2026 Bulletin 2026/10**

(21) Application number: **24796157.6**

(22) Date of filing: **25.04.2024**

(51) International Patent Classification (IPC):
***B32B 15/08*** *(2006.01)*

(52) Cooperative Patent Classification (CPC):
Y02E 60/10

(86) International application number:
**PCT/CN2024/089747**

(87) International publication number:
**WO 2024/222781 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 CN 202310488901**

(71) Applicant: **BYD Company Limited**
**Shenzhen, Guangdong 518118 (CN)**

(72) Inventors:
• **LI, Peng**
**Shenzhen, Guangdong 518118 (CN)**
• **WAN, Long**
**Shenzhen, Guangdong 518118 (CN)**
• **YANG, Shenglin**
**Shenzhen, Guangdong 518118 (CN)**
• **SHEN, Yu**
**Shenzhen, Guangdong 518118 (CN)**
• **YOU, Wan**
**Shenzhen, Guangdong 518118 (CN)**

(74) Representative: **Mathys & Squire**
**The Shard**
**32 London Bridge Street**
**London SE1 9SG (GB)**

(54) **PROTECTIVE PLATE, BATTERY PACK, AND ELECTRIC DEVICE**

(57) Provided are a protective plate, a battery pack, and an electric device. The protective plate includes a metal substrate and nanoparticle reinforced polymer composite layers that are stacked, and specific parameters of the layers meet a specific mathematical relationship, so that the protective plate can have better anti-collision performance, better scratch resistance, and stronger bullet-proof and explosion-proof performance with a lower weight, and therefore the protective plate has a higher cost-performance ratio and a good application prospect.

FIG. 2

## Description

This application claims priority to Chinese Patent Application No. 202310488901.9, filed with the China National Intellectual Property Administration on April 28, 2023, which is incorporated herein by reference in its entirety.

## TECHNICAL FIELD

This application relates to the field of new energy technologies, and in particular to a protection plate, a battery pack, and an electric device.

## BACKGROUND

A battery pack of a new energy electric vehicle is usually disposed at the bottom of the vehicle. When the vehicle drives on a rugged road or other irregular roads, the bottom of the battery pack is likely to be impacted by collisions or by hard objects such as stones. Therefore, a specific protective structure needs to be disposed at the bottom of the battery pack, so as to protect the battery pack and improve the safety of the vehicle.

An existing protection plate for a battery pack usually includes a buffer substance and a steel panel. The buffer substance and the steel panel are filled in a reserved buffer space at the bottom of a tray of the battery pack. However, the steel panel has heavy weight, poor impact resistance and needs a large, reserved space. A design height of a vehicle chassis is limited, which restricts the improvement of aesthetics, grip force, comfort level, and other performance of the vehicle.

## SUMMARY

In view of this, this application provides a protection plate. The protection plate includes a metal substrate and nanoparticle reinforced polymer composite layers that are stacked, and specific parameters of the layers meet a specific mathematical relationship, so that the protection plate can have better impact resistance, better scratch resistance, and stronger ballistic and blast resistance performance while maintaining a low weight, and therefore the protection plate has a higher cost-performance ratio and a good application prospect.

In a first aspect of this application, a protection plate is provided. The protection plate includes a first composite layer having a thickness of $d_1$ mm, a metal substrate, and a second composite layer having a thickness of $d_2$ mm that are sequentially stacked; wherein $d_1 > 0$, and $d_2 \geq 0$; the first composite layer and the second composite layer each include a polymer base material and a reinforcing material; the reinforcing material includes nanoparticles;

the first composite layer has a tensile strength of $\sigma_1$ MPa; the second composite layer has a tensile strength of $\sigma_2$ MPa; the metal substrate has a thickness of $d_3$ mm and a tensile strength of $\sigma_3$ MPa; and the protection plate meets the following formula:

$$\frac{d_3}{(d_1 + d_2) + d_3} \times \frac{\sigma_3}{(\sigma_1 + \sigma_1) + \sigma_3} > 0.03200.$$

The foregoing first composite layer and the foregoing second composite layer have better impact resistance, scratch resistance, and corrosion resistance, and the metal substrate has better strength. This application defines a quantitative relationship between strength and thicknesses of the first composite layer, the second composite layer, and the metal substrate, and cooperation among various mechanical properties of the protection plate is fully coordinated, so that the protection plate can have better impact resistance and scratch resistance, stronger ballistic and blast resistance performance while maintaining a thin thickness and a small mass range, and therefore the protection plate has a good application prospect.

Optionally, $\quad 0.032 < \dfrac{d_3}{(d_1 + d_2) + d_3} \times \dfrac{\sigma_3}{(\sigma_1 + \sigma_1) + \sigma_3} < 0.652$.

Optionally, $d_1 \geq d_2$, and/or $\sigma_1 \geq \sigma_2$.

Optionally, $1.0 \leq (d_1 + d_2) \leq 10.0$.

Optionally, $16.9 \leq \sigma_1 \leq 60$; and $16.9 \leq \sigma_2 \leq 60$.

Optionally, $0.5 \leq d_3 \leq 2$; and $270 \leq \sigma_3 \leq 1500$.

Optionally, $d_1 > d_2$.

Optionally, $0.1 \leq d2 \leq 2.0$.

Optionally, the nanoparticles include at least one of nano silica, a nano silica modifier, nano titanium dioxide, a nano titanium dioxide modifier, nano calcium carbonate, a nano calcium carbonate modifier, nano silicon carbide, a nano silicon carbide modifier, graphene, a graphene modifier, graphene oxide, a graphene oxide modifier, carbon nanotubes, a carbon nanotube modifier, a micropowder organic polymer, and a micropowder organic polymer modifier.

Optionally, the polymer base material includes at least one of a polyurea elastomer, polyisocyanate, aminopolyether, polyurethane, polyether polyol, and nylon.

Optionally, the protection plate further includes an anti-corrosion layer. The anti-corrosion layer does not contain the nanoparticles.

When $d_2$=0, the anti-corrosion layer is disposed on one side of the metal substrate that faces away from the first composite layer; or when $d_2$>0, the anti-corrosion layer is disposed on a surface of the protection plate.

Optionally, a third composite layer is further disposed on a side wall of the metal substrate.

Optionally, a material of the third composite layer is the same as that of the first composite layer; or a material of the third composite layer is the same as that of the second composite layer.

Optionally, the protection plate further includes a buffer layer. When $d_2$=0, the buffer layer is disposed on one side of the metal substrate that faces away from the first composite layer; or when $d_2$>0, the buffer layer is disposed on one side of the second composite layer that faces away from the metal substrate.

Optionally, the protection plate further includes a buffer layer. When $d_2$=0, the buffer layer is disposed on one side of the anti-corrosion layer that faces away from the metal substrate; or when $d_2$>0, the buffer layer is disposed on one side of the anti-corrosion layer that faces away from the second composite layer.

In a second aspect of this application, a battery pack is provided. The battery pack includes a tray, a battery cell assembly, and the protection plate provided in the first aspect of this application. The battery cell assembly and the protection plate are respectively installed on two opposite sides of the tray.

The battery pack may have better impact resistance and better scratch resistance.

Optionally, the first composite layer is disposed on one side of the metal substrate that faces away from the tray.

In a third aspect of this application, an electric device is provided. The electric device includes a battery pack provided in the second aspect of this application. Because of the foregoing battery pack, an area of the electric device provided with the battery pack may have better impact resistance and better scratch resistance, resulting in a higher safety coefficient.

## BRIEF DESCRIPTION OF DRAWINGS

FIG. 1 is a structural diagram of a battery pack according to an embodiment of this application;
FIG. 2 is a structural diagram of a protection plate in a state in FIG. 1;
FIG. 3 is a structural diagram of a protection plate in another state in FIG. 1;
FIG. 4 is a structural diagram of a protection plate in yet another state in FIG. 1;
FIG. 5 is a structural diagram of a protection plate in another state in FIG. 1;
FIG. 6 is a structural diagram of a protection plate in yet another state in FIG. 1; and
FIG. 7 is a distribution diagram of ball impact points on a to-be-detected protection plate adopted in an anti-impact test in this application.

Reference numerals: 1: battery pack; 11: tray; 12: battery cell assembly; 13: sealing cover; 14: buffer layer; 15: anti-corrosion layer; 100: protection plate; 100b: back face of protection plate; 100a: front face of protection plate; 10: first composite layer; 20: second composite layer; 30: metal substrate; and 40: third composite layer.

## DESCRIPTION OF EMBODIMENTS

Directional terms mentioned in this application, for example, "upper", "lower", "before", "after", "left", "right", "inside", "outside", "front", "back", "bottom", "top", "thickness", "length", and "width", are only orientations shown with reference to the drawings. Therefore, the directional terms are used to better and more clearly illustrate and understand this application, rather than indicating or implying that the apparatus or element referred to must have a particular orientation, be constructed and operate in a particular orientation, and thus is not to be construed as limiting this application. The terms "set", "connect", and "install" in this application will be understood in a board sense. For example, the element may be directly set, connected, or installed, or may be indirectly set, connected, or installed by using an intermediate medium.

The terms such as "first" and "second" used in this application are intended to distinguish different objects rather than indicating a particular order. In the descriptions of this application, unless otherwise stated, "a plurality of" means greater than or equal to two. In addition, a numerical range indicated by "-" in this specification refers to a range in which values recorded before and after "-" are regarded as a minimum value and a maximum value respectively. In the drawings, the structurally same or similar units are denoted by same signs.

The specific technical features and embodiments described in the specific implementations may be combined in any appropriate manner without conflicting with each other. For example, different specific technical features/embodiments are combined to form different implementations. In order to avoid unnecessary repetition, various possible combinations of this application are not otherwise described.

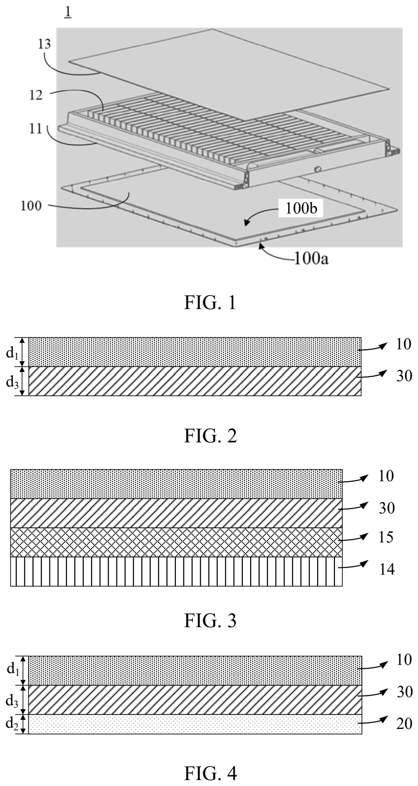

The following describes a protection plate and a battery pack according to the embodiments of this application. Refer to FIG. 1 to FIG. 4. FIG. 1 is a structural diagram of a battery pack 1 using a protection plate 100 according to this application. FIG. 2 to FIG. 6 are structural diagrams of a protection plate 100 in several different states in FIG. 1.

Refer to FIG. 1. The battery pack 1 may include a tray 11, and a battery cell assembly 12 and a protection plate 100 that are installed on the tray 11. The battery cell assembly 12 and the protection plate 100 are respectively installed on two opposite sides of the tray 11. The battery cell assembly 12 and the protection plate 100 may be specifically installed on two opposite sides of a bottom plate of the tray 11. The protection plate 100 is installed on one side (that is, at the bottom of the tray 11) of the tray 11 that faces away from the battery cell assembly 12. Specifically, an accommodating slot may be disposed at the bottom of the tray 11, and the protection plate 100 is installed in the accommodating slot.

In addition, the battery pack 1 further includes a sealing cover 13 disposed on the tray 11. The sealing cover 13 and the tray 11 encloses an accommodating space. The battery cell assembly 12 may be accommodated in the accommodating space, so as to protect the battery cell assembly 12 from various directions. The battery cell assembly 12 may be one or more battery cells, or may be one or more battery modules. In some implementations, the battery cell assembly 12 includes a plurality of battery modules to increase electric capacity of the battery pack 1.

The battery pack 1 may be fastened to a vehicle body bottom of a vehicle using the battery pack. In a driving process of the vehicle, when the vehicle body bottom is subjected to impact and extrusion of hard objects such as stones, the protection plate 100 located at the bottom of the battery pack 1 can play a role of resisting impact deformation, so as to prevent an external impact force from directly acting on the battery cell assembly 12 of the battery pack 1, thereby protecting the battery.

For ease of understanding, this application defines a surface of the protection plate 100 that faces away from the tray 11 as a front face 100a of the protection plate 100. The front face is also a main stress surface of the protection plate 100, and faces the ground on which the vehicle drives; and this application defines a surface of the protection plate 100 that faces the tray 11 as a back face 100b of the protection plate 100.

Embodiments of this application provide a protection plate 100. The protection plate includes a first composite layer 10 having a thickness of $d_1$ mm, a metal substrate 30, and a second composite layer 20 having a thickness of $d_2$ mm that are sequentially stacked. $d_1>0$, and $d_2≥0$. The first composite layer 10 and the second composite layer 20 each include a polymer base material and a reinforcing material.

The first composite layer 10 has a tensile strength of $\sigma_1$ MPa. The second composite layer 20 has a tensile strength of $\sigma_2$ MPa. The metal substrate 30 has a thickness of $d_3$ mm and a tensile strength of $\sigma_3$ MPa. The protection plate 100 meets the following formula:

$$\frac{d_3}{(d_1+d_2)+d_3} \times \frac{\sigma_3}{(\sigma_1+\sigma_1)+\sigma_3} > 0.03200 \, .$$

The first composite layer 10 serves as a front face 100a of the protection plate. The first composite layer 10 and the optional second composite layer 20 have specific strength and better toughness, have impact resistance and scratch resistance, and may provide strength to the metal substrate 30 and support the first composite layer and the second composite layer. More importantly, by defining a specific relationship between the thicknesses and strength of the foregoing first composite layer, the foregoing second composite layer, and the foregoing metal substrate 30, the impact resistance, scratch resistance, and strength of the protection plate 100 can be sufficiently adjusted while the thickness of each layer is sufficiently reduced, so that the comprehensive performance of the protection plate 100 is better. Therefore, the degree of lightweight of the protection plate 100 can be improved, the production cost of the protection plate 100 can be reduced, which facilitates the application of the protection plate 100.

In addition, the first composite layer 10 and the second composite layer 20 each include a polymer base material and nanoparticles dispersed in the polymer base material. A nano-reinforced polymer material itself has better corrosion resistance, so that the protection plate 100 has better corrosion resistance. The nanoparticles are dispersed in the polymer base material. Van der Waals force can be used as a physical crosslinking point between polymer chains, and/or chemical bonds are formed between chemical groups possibly carried on surfaces of the nanoparticles and groups on the polymer chains so as to become a chemical crosslinking point between the polymer chains. Therefore, a three-dimensional network polymer structure can be formed, the polymer base material can be reinforced and toughened, the hardness and cohesion of the composite layer can be improved, and the impact resistance and scratch resistance of the protection plate 100 can be improved. In addition, the foregoing first composite layer 10 and the foregoing second composite layer 20 can show high ductility and high elasticity at low strain rates, and show rate sensitivity at high strain rates (absorbing energy and transforming into a harder phase), so that the protection plate 100 has stronger ballistic and blast resistance, and the protection plate 100 can have a higher degree of lightweight, better impact resistance and scratch resistance, higher strength, better corrosion resistance, and stronger ballistic and blast resistance.

In addition, the first composite layer 10 and the second composite layer 20 are higher in density, and the oxidation resistance and corrosion resistance of the protection plate 100 can be improved. In some implementations of this application, a third composite layer 40 is wrapped around a side wall of the metal substrate 30. In some implementations of this application, a material of the third composite layer 40 is the same as that of the first composite layer 10, or a material of the third composite layer 40 is the same as that of the second composite layer 20. In this way, the corrosion resistance of the protection plate 100 is improved, and a bonding force between the first composite layer 10 and/or the second composite layer 20 and the metal substrate 30 is further increased. In this application, there may be or may not be an interface between the third composite layer 40 and the first composite layer 10. There may be or may not be an interface between the third composite layer 40 and the second composite layer 20. It can be understood that when there is no interface between the third composite layer 40 and the first composite layer and/or the second composite layer 20, the third composite layer 40 is integrally formed with the first composite layer 10 and/or the second composite layer 20. In some specific embodiments, a length and/or width of the metal substrate 30 are/is smaller than a size of the first composite layer 10. There is no interface between the first composite layer 10 and the third composite layer 40, which is beneficial to the improvement of an anti-corrosion effect, a toughening effect, and the like of the metal substrate 30 in all directions, and improve a bonding force between the metal substrate 30 and the first composite layer 10.

For ease of description, $\dfrac{d_3}{(d_1 + d_2) + d_3} \times \dfrac{\sigma_3}{(\sigma_1 + \sigma_1) + \sigma_3}$ is denoted as $\lambda$ herein. In some implementations of this application, $0.03200 < \lambda < 0.65200$. For example, a value of the foregoing $\lambda$ may be 0.03200, 0.03500, 0.04000, 0.05000, 0.08000, 0.10000, 0.15000, 0.2000, 0.25000, 0.30000, 0.35000, 0.40000, 0.45000, 0.50000, 0.55000, 0.60000, 0.65000, 0.65100, or the like. By controlling the value of $\lambda$ to be within the foregoing range, the protection plate 100 has better protective performance and is easy to prepare.

In this application, the foregoing first composite layer 10 may be disposed on a surface of one side of the metal substrate 30 (that is, in a case that $d_2 = 0$). The foregoing first composite layer 10 and the foregoing second composite layer 20 may alternatively be respectively disposed on surfaces of two opposite sides of the metal substrate 30 (that is, in a case that $d_2 > 0$).

In some implementations of this application, as shown in FIG. 3, the protection plate 100 further includes an anti-corrosion layer 15. The anti-corrosion layer does not contain the foregoing nanoparticles. In some specific embodiments, when $d_2 = 0$, the anti-corrosion layer is disposed on a surface of one side of the metal substrate 30 that faces away from the first composite layer 10. In this way, the protection plate 100 may still have better impact resistance, scratch resistance, higher strength, and stronger ballistic and blast resistance, and can further improve the degree of lightness and thinness of the protection plate 100. It can be understood that, at this time, a surface of one side of the protection plate that is provided with the first composite layer 10 serves as a front face 100a of the protection plate. In some specific implementations of this application, a material of the foregoing anti-corrosion layer may be a material well known to a person of ordinary skill in the metal corrosion resistance field. For example, the material of the foregoing anti-corrosion layer may be an anti-corrosion coating or the like. In the foregoing conditions, in some implementations, the foregoing anti-corrosion layer is also wrapped around a side wall of the metal substrate 30.

In some implementations of this application, as shown in FIG. 4, $d_2 > 0$, and the foregoing first composite layer 10 and the foregoing second composite layer 20 are respectively disposed on two opposite side surfaces of the metal substrate 30. In this way, the mechanical property and the anti-corrosion capability of the protection plate 100 can be further improved, which facilitates the application of the protection plate 100. In some implementations of this application, when $d_2 > 0$, the protection plate 100 may also include the foregoing anti-corrosion layer. In this way, the anti-corrosion layer may be disposed on the surface of the protection plate 100, and the anti-corrosion layer may be disposed on the front face 100a of the protection plate 100, or on the back face 100b of the protection plate 100, or may be disposed on both the front face 100a and the back face 100b of the protection plate 100.

In this application, the thickness $d_1$ of the first composite layer 10 and the thickness $d_2$ of the second composite layer 20 may be the same or different. The tensile strength $\sigma_1$ of the first composite layer 10 and the tensile strength $\sigma_2$ of the second composite layer 20 may be the same or different. In some implementations, $d_1 \geq d_2$, and/or $\sigma_1 \geq \sigma_2$. When the thicknesses and strength of the first composite layer 10 and the second composite layer 20 are the same, the first composite layer 10 and the second composite layer 20 may not be distinguished. When parameters in any of the foregoing two groups of parameters are different, that is, in some implementations, $d_1 \geq d_2$, and/or $\sigma_1 > \sigma_2$, a nanoparticle reinforced polymer base material layer having a greater thickness and/or higher tensile strength is identified as the first composite layer. In this way, the first composite layer 10 as the front face 100a of the protection plate is more beneficial to the improvement of the protective effect of the protection plate 100.

In some implementations of this application, the thickness of the first composite layer 10 is greater than the thickness of the second composite layer 20, that is, $d_1>d_2$. In this way, the impact resistance and scratch resistance of the protection plate 100 can be further improved. In the foregoing condition, the tensile strength $\sigma_1$ of the first composite layer 10 and the tensile strength $\sigma_2$ of the second composite layer 20 may be equal or unequal. In some specific embodiments, the tensile strength of the first composite layer 10 and the second composite layer 20 may be the same ($\sigma_1=\sigma_2$), and $d_1>d_2$. In this way, the protective performance of two opposite sides of the protection plate 100 can be balanced better, so that the protection plate 100 can have better comprehensive protective effect at lower costs.

In some specific implementations of this application, $\sigma_1>\sigma_2$. That is, the tensile strength $\sigma_1$ of the first composite layer 10 is greater than the tensile strength $\sigma_2$ of the second composite layer 20. It can be understood that the first composite layer 10 serves as the front face 100a of the protection plate, or the first composite layer 10 with the foregoing anti-corrosion layer serves as the front face 100a of the protection plate, and controlling $\sigma_1>\sigma_2$ is more beneficial for improvement of the protective effect of the protection plate 100, specifically, beneficial for exerting impact resistance and scratch resistance of the protection plate 100. Further, in some specific embodiments, $\sigma_1>\sigma_2$, and $d_1>d_2$. In this way, the impact resistance and scratch resistance of the protection plate 100 are more concentrated on the front face 100a of the protection plate, which is more beneficial for resisting damage by external forces from the ground.

In some implementations of this application, $1.0\leq(d_1+d_2)\leq10$. That is, a total thickness of the first composite layer 10 and the second composite layer 20 is within a range of 1.0 mm to 3.5 mm. For example, the total thickness of the first composite layer 10 and the second composite layer 20 may be 1.0 mm, 1.2 mm, 1.5 mm, 1.8 mm, 2.0 mm, 2.2 mm, 2.5 mm, 2.8 mm, 3.0 mm, 3.2 mm, 3.3 mm, 3.4 mm, 3.5 mm, 4.0 mm, 4.5 mm, 5.0 mm, 5.5 mm, 6.0 mm, 6.5 mm, 7.0 mm, 7.5 mm, 8.0 mm, 8.5 mm, 9.0 mm, 9.5 mm, 10.0 mm, or the like. In this way, the thickness of the protection plate 100 can be sufficiently reduced whilst ensuring better comprehensive protective performance of the protection plate 100.

In some implementations of this application, $0.1\leq d_2\leq2.0$. That is, the thickness of the second composite layer 20 is within a range of 0.1 mm to 2.0 mm. For example, the thickness of the second composite layer 20 may be 0.1 mm, 0.2 mm, 0.3 mm, 0.4 mm, 0.5 mm, 0.8 mm, 1.0 mm, 1.2 mm, 1.5 mm, 1.8 mm, 2.0 mm, or the like. In some implementations of this application, $0.9\leq d_1\leq8.0$. That is, the thickness of the first composite layer 10 is within a range of 0.9 mm to 8.0 mm. For example, the thickness of the first composite layer 10 may be 0.9 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 7.5 mm, 8.0 mm, or the like. In this way, the protection plate 100 can have better corrosion resistance and better impact resistance and scratch resistance.

In some implementations of this application, $16.9\leq\sigma_1\leq60$. That is, the tensile strength of the first composite layer 10 is within a range of 16.9 MPa to 60 MPa. For example, the tensile strength of the first composite layer 10 may be 16.9 MPa, 17 MPa, 18 MPa, 20 MPa, 25 MPa, 30 MPa, 35 MPa, 40 MPa, 45 MPa, 50 MPa, 55 MPa, 60 MPa, or the like. The tensile strength of the first composite layer 10 is controlled within the foregoing range, which helps ensure that the impact resistance and scratch resistance of the first composite layer 10 are better. Therefore, when the first composite layer serves as the front face 100a of the protection plate, the protective performance of the protection plate 100 can be more fully exerted. In some implementations of this application, elongation at break of the first composite layer 10 is greater than or equal to 300%. In this way, the absorption capability of the first composite layer 10 is improved, and the protective performance of the protection plate 100 is further improved.

In some implementations of this application, $16.9\leq\sigma_2\leq60$. That is, the tensile strength of the second composite layer 20 is within a range of 16.9 MPa to 60 MPa. For example, the tensile strength of the second composite layer 20 may be 16.9 MPa, 17 MPa, 18 MPa, 20 MPa, 25 MPa, 30 MPa, 35 MPa, 40 MPa, 45 MPa, 50 MPa, 55 MPa, 60 MPa, or the like. The tensile strength of the second composite layer 20 is controlled within the foregoing range, which is more beneficial for improvement of the entire impact resistance of the protection plate 100.

In this application, the tensile strength of the first composite layer 10 may be adjusted by adjusting a material composition of the first composite layer 10. For example, the tensile strength of the first composite layer 10 may be adjusted by adjusting a content, particle size, and kind of the nanoparticles and a content, degree of polymerization, and kind of the polymer base material. Similarly, the tensile strength of the second composite layer 20 may also be adjusted based on the foregoing principles. Those skilled in the art may make flexible changes based on actual production conditions. In some implementations of this application, elongation at break of the second composite layer 20 is greater than or equal to 300%. In this way, the absorption capability of the second composite layer 20 is improved, and the protective performance of the protection plate 100 is further improved.

In some implementations of this application, the first composite layer 10 and the second composite layer 20 each include at least one naoparticle reinforced polymer layer selected from the followings: nano silica, a nano silica modifier, nano titanium dioxide, a nano titanium dioxide modifier, nano calcium carbonate, a nano calcium carbonate modifier, nano silicon carbide, a nano silicon carbide modifier, graphene, a graphene modifier, graphene oxide, a graphene oxide modifier, carbon nanotubes, a carbon nanotube modifier, a micropowder organic polymer, and a micropowder organic polymer modifier. In some specific embodiments, the foregoing nanoparticles are selected from at least one of graphene oxide, modified carbon nanotubes, and a micropowder organic polymer. That is, the first composite layer 10 and the second composite layer 20 each include at least one nanoparticle reinforced polymer layer selected from graphene oxide, modified carbon nanotubes, and a micropowder organic polymer, and the surfaces of the foregoing nanoparticles may be modified with functional groups generating chemical bonds with the polymer base material. In this way, the foregoing nanoparticles can serve as chemical crosslinking points, which is more beneficial to the improvement of the strength of the first composite layer 10 and the second composite layer 20.

In some implementations of this application, that first composite layer 10 and the second composite layer 20 each include at least one selected from a nanoparticle reinforced polyurea elastomer, nanoparticle reinforced polyisocyanate, nanoparticle reinforced aminopolyether, nanoparticle reinforced polyurethane, nanoparticle reinforced polyether polyol, and nanoparticle reinforced nylon. In some specific embodiments, the first composite layer 10 and the second composite layer 20 each include a nanofiller reinforced polyurea elastomer. The polyurea elastomer has good weather resistance (having specific bearing capacity for light, high temperature, low temperature, and other conditions), better water penetration resistance, and better acid and alkali resistance, and can show specific temperature response and mechanical response capacity, good adhesiveness and high interfacial bonding force with the metal substrate 30, which is more beneficial to provide a protection plate 100 having better impact resistance, scratch resistance, ballistic resistance, blast resistance, and corrosion resistance. In addition, the polyurea elastomer has fast curing speed and loose molding conditions, which is beneficial to the improvement of production efficiency and reduce production costs.

In some implementations of this application, $0.5 \leq d_3 \leq 2.0$. That is, the thickness of the metal substrate 30 is within a range of 0.5 mm to 2.0 mm. For example, the thickness of the metal substrate 30 may be 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.8 mm, 2.0 mm, or the like. The metal substrate 30 having a suitable thickness can ensure that the metal substrate 30 can play a good supporting role, and can bear a part of impact/extrusion force caused by foreign objects such as stones.

In some implementations of this application, $270 \leq \sigma_3 \leq 1500$. That is, the tensile strength of the metal substrate 30 is within a range of 270 MPa to 1500 MPa. For example, the tensile strength of the metal substrate 30 may be 270 MPa, 280 MPa, 290 MPa, 300 MPa, 350 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1180 MPa, 1200 MPa, 1250 MPa, 1300 MPa, 1350 MPa, 1400 MPa, 1450 MPa, 1490 MPa, or the like. In this way, the metal substrate 30 itself can bear a larger impact and bear a larger load, and the first composite layer 10 and/or the second composite layer 20 can implement better protective performance without requiring too high tensile strength, which is beneficial to balance the protective performance of the protection plate 100 in various aspects and reduce difficulty in manufacturing the protection plate 100. In this application, the tensile strength of the metal substrate 30 can be adjusted by changing material selection of the metal substrate 30. In some implementations of this application, the material of the metal substrate 30 includes, but is not limited to, at least one of aluminum, an aluminum alloy, magnesium, a magnesium alloy, and steel.

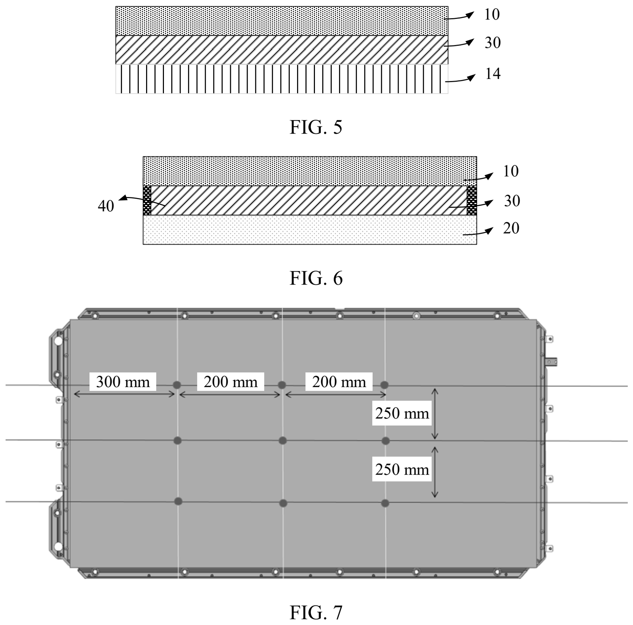

In some implementations of this application, as shown in FIG. 5, the protection plate 100 further includes a buffer layer 14. The buffer layer is disposed on a surface of the metal substrate 30 that faces away from the first composite layer 10, or the buffer layer is disposed on a surface of the second composite layer 20 that faces away from the metal substrate 30. Specifically, when the protection plate 100 includes a second composite layer 20 (that is, $d_2 > 0$), the buffer layer is disposed on one side of the second composite layer 20 that faces away from the metal substrate 30. If an anti-corrosion layer is provided at this time, the buffer layer is disposed on one side of the anti-corrosion layer that faces away from the second composite layer 20. When the protection plate 100 dost not contain a second composite layer 20 (that is, $d_2 = 0$), the buffer layer is disposed on one side of the metal substrate 30 that faces away from the first composite layer 10. It can be understood that if the protection plate 100 has an anti-corrosion layer, the buffer layer is disposed on one side of the anti-corrosion layer that faces away from the metal substrate 30. In this way, the impact resistance of the protection plate 100 can be further improved. In this application, the material of the foregoing buffer layer includes, but is not limited to, microcellular polypropylene foam (MPP for short).

In some implementations of this application, preparation of the foregoing protection plate 100 may include the following steps:

Form a first composite layer on a surface of one side of the metal substrate, or respectively form a first composite layer and a second composite layer on surfaces of two opposite sides of the metal substrate, so as to obtain the protection plate. The first composite layer and the second composite layer each include a polymer base material and a reinforcing material. The reinforcing material includes nanoparticles.

The first composite layer has a thickness of $d_1$ mm and a tensile strength of $\sigma_1$ MPa. The second composite layer 20 has a thickness of $d_2$ mm and a tensile strength of $\sigma_1$ MPa. The metal substrate has a thickness of $d_3$ mm and a tensile strength of $\sigma_3$ MPa. $d_1 \geq d_2$, and/or $\sigma_1 \geq \sigma_2$. The protection plate meets the following formula:

$$\frac{d_3}{(d_1 + d_2) + d_3} \times \frac{\sigma_3}{(\sigma_1 + \sigma_1) + \sigma_3} > 0.032 \, ,$$

where

$$d_2 \geq 0.$$

The foregoing preparation method is simple in steps and high in production efficiency, and can implement large-scale industrial production.

In some specific implementations of this application, the foregoing preparation method includes the following steps:

(1) Load a first raw material into a first container, and load a second raw material into a second container. The first raw material includes a polymer prepolymer, a polymer semi-prepolymer, and a monomer or polymer used to form a polymer, and the second raw material includes a nano material and an auxiliary agent.

(2) Uniformly mix the first raw material and the second raw material in a spraying apparatus to form a third raw material, and spray the third raw material on surfaces of two opposite sides of the metal base material, so as to form a first composite layer and a second composite layer after the third raw material is cured at a constant temperature.

The foregoing method facilitates rapid molding on any surface, and is not limited by a shape of the metal substrate. The surface of the metal substrate may be a curved surface, or may be a surface that is uneven or has a specific convex/concave structure.

This application further provides a battery pack with the foregoing protection structure according to the embodiments of this application. The battery pack includes a tray, a battery cell assembly, and the protection plate according to this application. The battery cell assembly and the protection plate are respectively installed on two opposite sides of the tray. For a structure of the battery pack, refer to the foregoing description of FIG. 1 in this application.

In addition to the tray 11, the battery cell assembly 12, the sealing cover 13, and the protection plate 100 mentioned above, the battery pack 1 may further include a battery management system, which is configured to monitor state information of each battery cell in the battery cell assembly 12 during charging/discharging, such as voltage, current, internal resistance, and temperature.

In some implementations of this application, the first composite layer is disposed on one side of metal substrate that faces away from the tray.

The protection plate according to the embodiments of this application has the advantages of a light weight, a thin thickness, an excellent anti-impact effect, strong ballistic and blast resistance, and the like. After the battery pack adopts the protection plate, in a driving process of the vehicle, when the vehicle body bottom is subjected to impact and extrusion of hard objects such as stones, the protection plate located at the bottom of the battery pack 1 can effectively resist external impact forces caused by foreign objects, so as to avoid the external impact forces from directly acting on the tray 11 and the battery cell assembly 12 of the battery pack 1 to damage the battery pack 1, or even cause firing explosion and the like, and then ensure that the battery pack can be well protected. An embodiment of this application further provides an electric device. The electric device includes the foregoing battery pack according to the embodiments of this application. In some implementations, the electric device is a vehicle, wherein the battery pack 1 may be fastened to the vehicle body bottom of the vehicle, and the protection plate 100 is located at the vehicle body bottom. Because the battery pack 1 is provided with the foregoing protection plate 100, the safety of the battery pack 1 can be ensured, so as to ensure that the vehicle using the battery pack can drive safely.

The battery pack 1 is configured to provide electric energy for the vehicle. The vehicle using the battery pack 1 to provide electric energy may be one or more of a pure electric vehicle, a hybrid electric vehicle, an electric motorcycle, an electric bicycle, and the like, and is relatively common in a pure electric vehicle or a hybrid electric vehicle.

Technical solutions of this application are further described in multiple examples as follows.

Example 1

A protection plate includes a first composite layer (specifically a silicon dioxide reinforced polyurea elastomer), a metal substrate (specifically a steel plate), and a second composite layer (specifically a silica nanoparticle reinforced polyurea elastomer). The first composite layer has a thickness $d_1$ of 0.9 mm and tensile strength $\sigma_1$ of 16.9 MPa. The second composite layer has a thickness $d_2$ of 0.1 mm and tensile strength $\sigma_2$ of 16.9 MPa. The metal substrate has a thickness $d_3$ of 0.5 and tensile strength $\sigma_3$ of 270 MPa. A side wall of the metal substrate is further coated with an anti-corrosion layer, and a material of the anti-corrosion layer is polyvinyl chloride (PVC).

Example 2

Differences from Example 1 lie in that a third composite layer is disposed on a side wall of the metal substrate, a material of the third composite layer is the same as that of the first composite layer, and there is no interface between the third composite layer and the first composite layer.

Example 3 to Example 11

Differences between Example 3 to Example 11 and Example 2 lie in that parameter settings of the first composite layer, the second composite layer, and the metal substrate are different, and all the parameters are summarized in Table 1.

Example 12

A protection plate includes a first composite layer, a metal substrate, and a PVC anti-corrosion layer that are stacked. The first composite layer has a thickness $d_1$ of 5.0 mm and tensile strength $\sigma_1$ of 60 MPa. The metal substrate has a thickness $d_3$ of 0.5 and tensile strength $\sigma_3$ of 270 MPa. A side wall of the metal substrate is also coated with the foregoing anti-corrosion layer.

To highlight beneficial effects of this application, the following comparative examples are set.

Comparative Example 1

A protection plate includes a metal plate (specifically a DP270 steel sheet having a thickness of 1.5 mm, surfaces and side walls of two opposite sides of the DP270 steel sheet being coated with a PVC layer having a thickness of 1 mm), and a microcellular polypropylene foam (MPP) buffer layer that are stacked, wherein the MPP buffer layer is close to a lower part of a tray of a battery pack, and the MPP buffer layer has a thickness of 7 mm.

Comparative Example 2

Differences from Example 2 lie in that parameter settings of the first composite layer, the second composite layer, and the metal substrate are different, and all the parameters are summarized in Table 1.

Table 1

| Test numbers | $d_1$ /mm | $\sigma_1$ /MPa | $d_2$ /mm | $\sigma_2$ /MPa | $d_1+d_2$ /mm | $d_3$ /mm | $\sigma_3$ /MPa | Values of formula |
|---|---|---|---|---|---|---|---|---|
| Example 1 | 0.9 | 16.9 | 0.1 | 16.9 | 1.0 | 0.5 | 270 | 0.29625 |
| Example 2 | 0.9 | 16.9 | 0.1 | 16.9 | 1.0 | 0.5 | 270 | 0.29625 |
| Example 3 | 1.0 | 16.9 | 0.5 | 16.9 | 1.5 | 0.5 | 270 | 0.22219 |
| Example 4 | 8.0 | 16.9 | 2.0 | 16.9 | 10.0 | 0.5 | 270 | 0.04232 |
| Example 5 | 8.0 | 16.9 | 2.0 | 16.9 | 10.0 | 2.0 | 270 | 0.14812 |
| Example 6 | 8.0 | 60.0 | 2.0 | 16.9 | 10.0 | 2.0 | 270 | 0.12972 |
| Example 7 | 8.0 | 60.0 | 2.0 | 60.0 | 10.0 | 2.0 | 270 | 0.11538 |
| Example 8 | 5.0 | 16.9 | 1.0 | 16.9 | 6.0 | 1.0 | 1500 | 0.13971 |
| Example 9 | 8.0 | 50.0 | 2.0 | 30.0 | 10.0 | 2.0 | 800 | 0.15152 |
| Example 10 | 8.0 | 60.0 | 2.0 | 60.0 | 10.0 | 0.5 | 270 | 0.03297 |
| Example 11 | 0.9 | 16.9 | 0.1 | 16.9 | 1.0 | 2 | 1500 | 0.65198 |
| Example 12 | 5.0 | 60.0 | 0.0 | / | 5.0 | 0.5 | 270 | 0.07438 |
| Comparative Example 1 | / | | | | | | | |
| Comparative Example 2 | 8.0 | 16.9 | 2.0 | 16.9 | 10 | 0.2 | 590 | 0.01856 |

Performance tests are performed on the protection plates in the foregoing examples and comparative examples:

(1) Impact resistance test: A light source and a camera are arranged, and a sensor is connected to a computer, so as to complete debugging preparation; calibration of ball strike points: based on test requirements, positions of required ball strike points are calibrated on each protection plate; calibration of ball strike energy: infrared claws are configured to clamp a load heavy object, and a gantry crane is lifted to a height of corresponding energy after the ball strike points are aligned (an infrared range finder is configured for accurate calibration); release of jaws: after position calibration and energy calibration, after data monitoring is normal, a remote infrared sensor gripper is released so that the heavy object completes an impact on the calibration points; wherein the ball strike points are in a ball strike area, and a distance between two adjacent ball strike points is more than 150 mm; and for specific ball strike point distribution, refer to FIG. 7; and the heavy object has a load of 26.2 Kg, and an impact ball head of the heavy object has a diameter of 25 mm.

Result collection: A digital camera is configured to shoot pictures after ball striking, and a computer is configured to arrange ball strike picture recording and sensor information, so as to calculate anti-impact test results of the protection plate. Results are summarized in Table 2.

(2) Wear resistance test: The test is performed as specified in GB/T 1768-2006, and results are summarized in Table 2. The results of the wear resistance test can reflect the scratch resistance of the protection plate.

(3) Tear strength test: The test is performed based on 5.1.2 of GB/T 529-2008 for right-angle test pieces. Results of the tear strength resistance test can reflect the explosion resistance of the protection plate.

(4) Anti-corrosion test: The test is performed based on a test method of Q/BYDQ-A1901.402.2-2017: 0.5 mol/L of sulfuric acid is dropped onto a surface of a to-be-tested protection plate sample, and a changing situation of the material is observed after 24 hours at a normal temperature. The protection plate sample is a square sample with a length/width of 50 mm. A thickness of the protection plate sample is an actual thickness of the protection plate, and there are at least five samples. Results are summarized in Table 2.

Table 2

| Test numbers | Anti-impact energy/J | Anti-corrosion tests | Total thickness of protection plate | Wear resistance | Tear strength |
|---|---|---|---|---|---|
| Example 1 | 200 | Passed | 1.5 | **(750g/500r)≤10mg** | **≥80KN/m** |
| Example 2 | 200 | Passed | 1.5 | **(750g/500r)≤10mg** | **≥80KN/m** |
| Example 3 | 220 | Passed | 2.0 | **(750g/500r)≤10mg** | **≥80KN/m** |
| Example 4 | 250 | Passed | 10.5 | **(750g/500r)≤10mg** | **≥80KN/m** |
| Example 5 | 300 | Passed | 12.0 | **(750g/500r)≤10mg** | **≥80KN/m** |
| Example 6 | 350 | Passed | 12.0 | **(750g/500r)≤10mg** | **≥80KN/m** |
| Example 7 | 400 | Passed | 12.0 | **(750g/500r)≤10mg** | **≥80KN/m** |
| Example 8 | 900 | Passed | 7.0 | **(750g/500r)≤10mg** | **≥80KN/m** |
| Example 9 | 600 | Passed | 12.0 | **(750g/500r)≤10mg** | **≥80KN/m** |
| Example 10 | 300 | Passed | 10.5 | **(750g/500r)≤10mg** | **≥80KN/m** |
| Example 11 | 700 | Passed | 3.0 | **(750g/500r)≤10mg** | **≥80KN/m** |
| Example 12 | 200 | Passed | 5.5 | **(750g/500r)≤10mg** | **≥80KN/m** |
| Comparative Example 1 | 150 | Passed | 10.5 | **(750g/500r)≤10mg** | **≥80KN/m** |
| Comparative Example 2 | 70 | Passed | 10.2 | **(750g/500r)≤10mg** | **≥80KN/m** |

With reference to parameters in Table 1 and data in Table 2, it can be seen that the protection plate according to the embodiments of this application has better impact resistance, scratch resistance, and explosion resistance. In addition, the protection plate also has better corrosion resistance. By comparing the parameters and test results of the protection plates in Example 1 to Example 4 and Comparative Example 1, the thickness of the metal substrate in the protection plate of the embodiment is only half that of Comparative Example 1. Considering densities of the composite layers and a honeycomb core layer, Example 1 to Example 4 can implement a better protective effect with a lower weight.

It is found, by comparing the data in the embodiments with that in Comparative Example 2, that even though the structure of the protection plate in Comparative Example 2 is the same as that in the embodiment of this application, a quantitative relationship between the parameters of each layer of the protection plate in Comparative Example 2 does not meet limitation of this application. Therefore, the impact resistance of the protection plate in Comparative Example 2 is significantly worse than that in Example 1 to Example 12.

By comparing the data in Embodiments 1, 3, and 4, it can be seen that in a case that other parameters remain unchanged, increasing the thickness of the first composite layer can improve the impact resistance of the protection plate, further increase the thickness of the second composite layer, and can further improve the impact resistance of the protection plate. By comparing the data in Embodiments 4 and 5, it can be seen that increasing the thickness of the metal substrate is also beneficial to the improvement of the impact resistance of the protection plate. By comparing the data in Example 5 and Example 6, it can be seen that, in order to reduce costs, the tensile strength of the first composite layer is increased so that $\sigma_1 > \sigma_2$, and the impact resistance of the protection plate can be further improved. It can be seen that from the data in Example 12, in a case that the second composite layer is not contained, the parameters of the first composite layer are adjusted so that the protection plate meets the limitation in this application, and the obtained protection plate may also have better protective performance. The tensile strength of the metal substrate is improved, and the impact resistance of the protection plate can also be improved.

The foregoing descriptions are exemplary implementations of this application. It should be noted that a person of ordinary skill in the art may make several improvements and modifications without departing from the principle of this application, and these improvements and modifications shall fall within the protection scope of this application.

## Claims

1. A protection plate (100), wherein the protection plate (100) comprises a first composite layer (10) having a thickness of $d_1$ mm, a metal substrate (30), and a second composite layer (20) having a thickness of $d_2$ mm that are sequentially stacked; wherein $d_1 > 0$, and $d_2 \geq 0$; the first composite layer (10) and the second composite layer (20) each comprise a polymer base material and a reinforcing material; the reinforcing material comprises nanoparticles;
the first composite layer (10) has a tensile strength of $\sigma_1$ MPa; the second composite layer (20) has a tensile strength of $\sigma_2$ MPa; the metal substrate (30) has a thickness of $d_3$ mm and a tensile strength of $\sigma_3$ MPa; and the protection plate (100) meets the following formula:

$$\frac{d_3}{(d_1+d_2)+d_3} \times \frac{\sigma_3}{(\sigma_1+\sigma_1)+\sigma_3} > 0.03200 \, .$$

2. The protection plate (100) according to claim 1, wherein

$$0.03200 < \frac{d_3}{(d_1+d_2)+d_3} \times \frac{\sigma_3}{(\sigma_1+\sigma_1)+\sigma_3} < 0.65200 \, .$$

3. The protection plate (100) according to claim 1 or 2, wherein $d_1 \geq d_2$, and/or $\sigma_1 \geq \sigma_2$.

4. The protection plate (100) according to claim 1 or 2, wherein $1.0 \leq (d_1+d_2) \leq 10.0$.

5. The protection plate (100) according to claim 1 or 2, wherein $16.9 \leq \sigma_1 \leq 60$; and $16.9 \leq \sigma_2 \leq 60$.

6. The protection plate (100) according to claim 1 or 2, wherein $0.5 \leq d_3 \leq 2.0$, and $270 \leq \sigma_3 \leq 1500$.

7. The protection plate (100) according to claim 1 or 2, wherein $d_1 > d_2$.

8. The protection plate (100) according to claim 7, wherein $0.1 \leq d_2 \leq 2.0$.

9. The protection plate (100) according to any one of claims 1 to 8, wherein the nanoparticles comprise at least one of nano silica, a nano silica modifier, nano titanium dioxide, a nano titanium dioxide modifier, nano calcium carbonate, a nano calcium carbonate modifier, nano silicon carbide, a nano silicon carbide modifier, graphene, a graphene modifier, graphene oxide, a graphene oxide modifier, carbon nanotubes, a carbon nanotube modifier, a micropowder organic polymer, and a micropowder organic polymer modifier.

10. The protection plate (100) according to any one of claims 1 to 9, wherein the polymer base material comprises at least one of a polyurea elastomer, polyisocyanate, aminopolyether, polyurethane, polyether polyol, and nylon.

11. The protection plate (100) according to any one of claims 1 to 9, wherein the protection plate (100) further comprises an anti-corrosion layer (15), and the anti-corrosion layer (15) does not contain the nanoparticles, wherein

when $d_2=0$, the anti-corrosion layer (15) is disposed on one side of the metal substrate (30) that faces away from the first composite layer (10);
when $d_2>0$, the anti-corrosion layer (15) is disposed on a surface of protection plate (100).

12. The protection plate (100) according to any one of claims 1 to 10, wherein a third composite layer (40) is further disposed on a side wall of the metal substrate (30).

13. The protection plate (100) according to claim 12, wherein a material of the third composite layer (40) is the same as that of the first composite layer (10), or a material of the third composite layer (40) is the same as that of the second composite layer (20).

14. The protection plate (100) according to any one of claims 1 to 10, wherein the protection plate (100) further comprises a buffer layer (14), wherein

when $d_2=0$, the buffer layer is disposed on one side of the metal substrate (30) that faces away from the first composite layer (10);
when $d_2>0$, the buffer layer is disposed on one side of the second composite layer (20) that faces away from the metal substrate (30).

15. The protection plate (100) according to claim 11, wherein the protection plate (100) further comprises a buffer layer (14), wherein

when $d_2=0$, the buffer layer is disposed on one side of the anti-corrosion layer (15) that faces away from the metal substrate (30);
when $d_2>0$, the buffer layer is disposed on one side of the anti-corrosion layer (15) that faces away from the second composite layer (20).

16. A battery pack (1), wherein the battery pack (1) comprises a tray (11), a battery cell assembly (12), and the protection plate (100) according to any one of claims 1 to 15, and the battery cell assembly (12) and the protection plate (100) are respectively installed on two opposite sides of the tray (11).

17. The battery pack (1) according to claim 16, wherein the first composite layer (10) is disposed on one side of the metal substrate (30) that faces away from the tray (11).

18. The battery pack (1) according to claim 16 or 17, further comprising a sealing cover (13) disposed on the tray (11).

19. An electric device, wherein the electric device comprises the battery pack (1) according to claim 16.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2024/089747** |

**A. CLASSIFICATION OF SUBJECT MATTER**

B32B15/08(2006.01)i

According to International Patent Classification (IPC) or to both national classification and IPC

**B. FIELDS SEARCHED**

Minimum documentation searched (classification system followed by classification symbols)

IPC:B32B

Documentation searched other than minimum documentation to the extent that such documents are included in the fields searched

Electronic data base consulted during the international search (name of data base and, where practicable, search terms used)

CNABS, CNTXT, WPABSC, WPABS, ENTXT, ENTXTC, DWPI, CNKI: 金属, 电池, 防护, 防爆, 纳米, metal+, batter+, protect+, nanometre

**C. DOCUMENTS CONSIDERED TO BE RELEVANT**

| Category* | Citation of document, with indication, where appropriate, of the relevant passages | Relevant to claim No. |
|---|---|---|
| Y | CN 217788632 U (BYD CO., LTD.) 11 November 2022 (2022-11-11) <br> claims 1-13, description, paragraphs [0005]-[0093], and figures 1-8 | 1-19 |
| Y | CN 113108646 A (HUO XIANMING) 13 July 2021 (2021-07-13) <br> description, paragraphs [0003]-[0037], and figures 1-16 | 1-19 |
| Y | CN 114210529 A (TSINGHUA UNIVERSITY) 22 March 2022 (2022-03-22) <br> claims 1-10 | 1-19 |
| Y | CN 106753151 A (QINGDAO AIR++ NEW MATERIALS CO., LTD.) 31 May 2017 (2017-05-31) <br> claims 1-9 | 1-19 |
| Y | CN 111434739 A (JUXIE CHEMICAL NEW MATERIAL TECHNOLOGY (SHANGHAI) CO., LTD.) 21 July 2020 (2020-07-21) <br> claims 1-7 | 1-19 |
| Y | US 2020339821 A1 (JOHN C. BECKER, IV) 29 October 2020 (2020-10-29) <br> description, paragraphs [0033]-[0101] | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2024** | **14 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/089747** |

| Patent document cited in search report | | | Publication date (day/month/year) | Patent family member(s) | | | Publication date (day/month/year) |
|---|---|---|---|---|---|---|---|
| CN | 217788632 | U | 11 November 2022 | None | | | |
| CN | 113108646 | A | 13 July 2021 | None | | | |
| CN | 114210529 | A | 22 March 2022 | None | | | |
| CN | 106753151 | A | 31 May 2017 | None | | | |
| CN | 111434739 | A | 21 July 2020 | None | | | |
| US | 2020339821 | A1 | 29 October 2020 | WO | 2019140447 | A1 | 18 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310488901